# EUROPÄISCHE PATENTSCHRIFT

(11) **EP 3 725 147 B1**
(45) Veröffentlichungstag und Bekanntmachung des Hinweises auf die Patenterteilung: **24.11.2021**
(21) Anmeldenummer: 20000154.3
(22) Anmeldetag: 16.04.2020
(51) Int. Cl.: A01D 34/66

(54) **MÄHMASCHINE**
MOWING MACHINE
FAUCHEUSE

(30) Priorität: 18.04.2019 DE 102019002828
(43) Veröffentlichungstag der Anmeldung: 21.10.2020
(73) Patentinhaber: Maschinenfabrik Bernard Krone GmbH & Co. KG, 48480 Spelle (DE)
(72) Erfinder: Lömker, Jens, 48496 Hopsten (DE); Grothe, Hendrik, 49716 Meppen (DE)

(56) Entgegenhaltungen:
- DE-A1- 4 407 812
- DE-A1- 10 157 289
- NL-A- 7 810 385
- US-A- 4 888 939
- US-A1- 2011 078 988

## Beschreibung

Die Erfindung betrifft eine Mähmaschine zum Mähen von landwirtschaftlichem Halm- und Blattgut nach dem Oberbegriff des Patentanspruches 1. Solche Mähmaschinen sind aus dem Stand der Technik in vielfältigen Ausführungsformen bekannt und bestehen im Allgemeinen aus einem, in der Arbeitsstellung bodennahen Mähholm, der an seiner Oberseite mit um etwa vertikale Achsen umlaufend angetriebenen Schneidorganen bestückt ist. Diese allgemein als Scheibenmähwerke bezeichneten Mähmaschinen werden in ihrer einfachsten Ausführung zum Abschneiden von halmförmigem Erntegut eingesetzt, wobei diese sowohl im Frontanbau als auch im Heckanbau an eine landwirtschaftliche Zug- und Antriebsmaschine ankoppelbar sind. Zur Erzielung hoher Flächenleistungen werden heute vielfach Gerätekombinationen (Triple-Mähkombinationen) eingesetzt, die aus einer Mähmaschine im Frontanbau sowie aus zwei Mähmaschinen im Heckanbau gebildet sind. Neuere Tendenzen bei der Gestaltung von Mähmaschinen setzen dabei auf eine Vergrößerung der Arbeitsbreiten bei derartigen Gerätekombinationen. Um dies erreichen zu können, ist es insbesondere notwendig, die Breitenabmessungen der Mähmaschine im Frontanbau so zu gestalten, dass beim Ernteeinsatz auf dem Feld eine Arbeitsbreite zur Verfügung gestellt ist, die oberhalb von den gesetzlichen vorgegebenen Abmessungen für den Transport auf der Straße liegen.

Aus der DE 101 57 289 A1 ist ein Mähwerk mit wenigstens zwei gekoppelten Mähbalken bekannt geworden, die über ein Verbindungsgelenk mit einander verbunden sind. Das Verbindungsgelenk ermöglicht dabei eine Verschwenkbarkeit des äußeren Mähbalkens gegenüber dem innenseitigen Mähbalken, welche in der Transportstellung dazu genutzt wird, die Transporthöhe geringfügig dadurch zu reduzieren, dass die beiden äußeren Mähbalken dachförmig zu den innenseitigen Mähbalken angestellt sind. Zur Versorgung der jeweiligen Mähbalken mit Antriebsenergie sind Gelenkwellen erforderlich, die sich zwischen den Tragbalken der Mähbalken erstrecken und deshalb bei der Verschwenkung der Mähbalken aus der Arbeitsstellung in eine etwa vertikale Transportstellung eine mangelnde Funktionalität und Bedienerfreundlichkeit deutlich wird. In diesem Zusammenhang sind aber auch Situationen zu nennen, in denen ein Anschlagen der Schneidwerkzeuge der Schneidorgane beim Schwenkvorgang benachbarter Mähbalken auftreten kann.

Die Druckschrift DE 44 07 812 A1 offenbart eine Trommelmähmaschine mit einem an einem Ende eines Basismähbalkens schwenkbar und pendelnd angelenkten Arm, an dessen Unterseite ein oder mehrere Außenmähkreisel angebracht sind.

Aufgabe der Erfindung ist es daher, eine Mähmaschine vorzuschlagen, bei der die Mängel aus dem Stand der Technik vermieden werden.

Erfindungsgemäß wird diese Aufgabe durch die Merkmale des kennzeichnenden Teils des Anspruchs 1 gelöst. Vorteilhafte Weiterbildungen der Erfindung gehen aus den weiteren Ansprüchen hervor.

Nach der Erfindung wird dazu eine Mähmaschine mit einer Anzahl von an einem Mähholm angebrachten, um eine etwa vertikale Achse rotierend angetriebenen Schneidorganen vorgeschlagen, welche an der Oberseite des in seiner Längserstreckung quer zur Fahrt- und Arbeitsrichtung der Mähmaschine ausgerichteten Mähholmes drehbar gelagert sind und von einer Antriebsanordnung rotierend antreibbar sind, die innerhalb des Mähholmes untergebracht ist, wobei der Mähholm an zumindest einem seiner beiden, quer zur Fahrt- und Arbeitsrichtung voneinander beabstandeten Enden eine Gelenk- und Antriebsanordnung zur Halterung eines weiteren, seitlichen Mähholmabschnittes und zum Antrieb des zumindest einen, an dem weiteren seitlichen Mähholmabschnitt angebrachten Schneidorganes aufweist und dass die Gelenk- und Antriebsanordnung aus zwei Halterungselementen gebildet ist, welche derartig zueinander angebracht sind, dass eine Schwenkbewegung des weiteren seitlichen Mähholmabschnittes innerhalb der Ebene des Mähholmes der Mähmaschine durchführbar ist, wobei die Halterungselemente der Gelenk- und Antriebsanordnung in mit geringem Abstand übereinanderliegenden Ebenen angeordnet sind.

Durch diese erfindungsgemäße Gestaltung wird erreicht, dass ein Mähholm einer Mähmaschine durch das Hinzufügen von zumindest einem weiteren seitlichen Mähholmabschnitt eine optionale Vergrößerung der Arbeitsbreite erfährt. Das bedeutet, dass während der Arbeit zumindest an einem der beiden Enden des in seiner Längserstreckung quer zur Fahrt- und Arbeitsrichtung gerichteten Mähholmes ein weiterer seitlicher Mähholmabschnitt mit zumindest einem daran angebrachten Schneidorgan so angegliedert ist, dass ein durchgehend bearbeiteter Feld- oder Wiesenstreifen entsteht. In einer vorteilhaften Weiterbildung kann es auch vorgesehen sein, dass an beiden Enden des Mähholmes der Mähmaschine ein weiterer seitlicher Mähholmabschnitt angeordnet ist. Zur optionalen Zuordnung des zumindest einen weiteren seitlichen Mähholmabschnittes an das Ende des Mähholmes der Mähmaschine ist erfindungsgemäß eine Gelenk- und Antriebsanordnung vorgesehen, welche aus zwei Halterungselementen gebildet ist, die an den dem Mähholm und dem zumindest einen weiteren Mähholmabschnitt abgewandten Ende schwenkbar miteinander verbunden sind. Durch diese schwenkbare Verbindung wird es erreicht, dass der zumindest eine weitere seitliche Mähholmabschnitt, der sich in der Arbeitsstellung der Mähmaschine in einer Flucht mit dem Mähholm befindet, in eine Transportstellung verschwenkt werden kann, die sich in Bezug zur Fahrt- und Arbeitsrichtung der Mähmaschine in etwa hinter den äußeren Schneidorganen des Mähholmes befindet. Durch die Erfindung wird also eine Mähmaschine geschaffen, bei der durch eine einfache Schwenkbewegung von zumindest einem weiteren Mähholmabschnitt innerhalb der Ebene des Mähholmes einer Vergrößerung der Arbeitsbreite in der Arbeitsstellung sowie eine Reduzierung der Breitenabmessungen der Mähmaschine in der Transportstellung herbeigeführt werden kann. Beispielsweise ist es damit in einfacher Art und Weise möglich, die Arbeitsbreite einer Mähmaschine im Frontanbau zu steigern, wobei dann aber gleichwohl die Breitenabmessungen der Mähmaschine in der Transportstellung unter der gesetzlich vorgegebenen Grenze von 3 Metern gehalten werden können.

Zur Anbindung von zumindest einem weiteren seitlichen Mähholmabschnitt an den Mähholm der Mähmaschine ist eine Gelenk- und Antriebsanordnung vorgesehen, die aus zwei in der Arbeitsstellung der Mähmaschine um eine etwa vertikal ausgerichtete Schwenkachse schwenkbar miteinander verbundenen Halterungselementen gebildet ist. Diese Halterungselemente sind weiterhin dazu ausgebildet, dass innerhalb dieser Halterungselemente Bauteile untergebracht sind, mit denen ein rotatorischer Antrieb der Schneidorgane des zumindest einen weiteren seitlichen Mähholmabschnittes ausgehend von dem Mähholm erreichbar ist. Das bedeutet, dass in dem schwenkbar veränderlichen Verbindungsbereich der beiden Halterungselemente eine Gelenkstelle eingerichtet ist, die eine Antriebsbewegung für die Schneidorgane übertragen kann.

In einer ersten vorteilhaften Ausführungsform kann es vorgesehen sein, dass das sich an das Ende des Mähholmes anschließende Halterungselement eine untere Ebene der Gelenk- und Antriebsanordnung bildet. In einer oberen Ebene erstreckt sich dann das zweite Halterungselement der Gelenk- und Antriebsanordnung. Da der Mähholm und der zumindest eine weitere seitliche Mähholmabschnitt in der Arbeitsstellung jedoch in einer einheitlichen Ebene angeordnet sein müssen, ist es erforderlich, dass eines der Halterungselemente der Gelenk- und Antriebsanordnung einen Höhenversatz auszugleichen hat. In dieser Ausführungsform kann dieser Höhenversatz in dem Halterungselement untergebracht sein, das sich von der Gelenkstelle zu dem zumindest einen weiteren seitlichen Mähholmabschnitt erstreckt. Der Abstand zwischen den jeweiligen Ebenen der Halterungselemente der Gelenk- und Antriebsanordnung ist dazu so gestaltet, dass während der Schwenkbewegung der Halterungselemente relativ zueinander gerade keine Berührung der Halterungselemente stattfindet. Mit dieser Gestaltung geht vorteilhaft eine geringe Bauhöhe der Gelenk- und Antriebsanordnung einher.

Gemäß einer weiteren denkbaren Ausführungsform kann das dem zumindest einen weiteren seitlichen Mähholmabschnitt zugewandte Halterungselement der Gelenk- und Antriebsanordnung in einer unteren Ebene auf Höhe des zumindest einen weiteren seitlichen Mähholmabschnittes angeordnet sein. In der oberen, der beiden Ebenen der Gelenk- und Antriebsanordnung ist dann das zweite, dem Mähholm zugewandte Halterungselement der Gelenk- und Antriebsanordnung mit dem Höhenversatz anzubringen.

Zur Übertragung von Antriebsleistung von den Schneidorganen des Mähholmes zu dem zumindest einen Schneidorgan des zumindest einen weiteren seitlichen Mähholmabschnittes sind die Halterungselemente der Gelenk- und Antriebsanordnung so gestaltet, dass im Innenraum der Halterungselemente eine Anzahl von miteinander in Eingriff stehenden Stirnräder angeordnet sind, die mit dem Antriebsrad des äußeren Schneidorganes des Mähholmes in Eingriff stehen und sich bis zur Gelenkstelle der Gelenk- und Antriebsanordnung erstrecken. In dieser Gelenkstelle der Gelenk- und Antriebsanordnung ist dann eine Stirnradwelle oder dgl. Antriebselement untergebracht, welche den Höhenversatz zwischen den beiden Halterungselementen der Gelenk- und Antriebsanordnung ausgleicht. Nach einer weiteren vorteilhaften Ausführung der Erfindung kann diese vertikale Stirnradwelle auch dazu ausgebildet sein, dass sowohl der Antrieb der Schneidorgane des Mähholmes als der Antrieb der Schneidorgane des zumindest einen weiteren seitlichen Mähholmabschnittes an dieser Stirnradwelle eingeleitet wird. Die Anzahl der Stirnräder, die innerhalb der Halterungselemente der Gelenk- und Antriebsanordnung zwischen dem Mähholm und der Gelenkstelle untergebracht sind, hängt davon ab, ob die Mähmaschine nur zum Schneiden von Halmgut eingesetzt werden soll oder ob die Mähmaschine mit einer hinter den Schneidorganen angebrachten Aufbereitungseinheit zum Schneiden und Konditionieren des Halmgutes verwendet werden soll. Die Verwendung einer Ausbereitungseinheit hinter den Schneidorganen des Mähholmes erfordert natürlich einen größeren Bauabstand, wenn der zumindest eine weitere, seitliche Mähholmabschnitt in der Transportstellung hinter die Mähorgane zu verschwenken ist. Weiterhin dient die Auswahl der Anzahl der in den Halterungselementen eingesetzten Stirnräder, die Drehrichtung der Schneidorgane des zumindest einen weiteren, seitlichen Mähholmabschnittes zu beeinflussen.

In einer weiteren vorteilhaften Ausführungsform der Erfindung kann es vorgesehen sein, dass das Verschwenken des zumindest einen weiteren Mähholmabschnitt zwischen der Arbeitsstellung und der Transportstellung durch eine Betätigungseinrichtung eingeleitet wird. Dazu können verschiedenste Antriebsmittel, wie ein hydraulisch oder pneumatisch angetriebenes Stellglied sein.

Nachfolgend wird ein vorteilhaftes Ausführungsbeispiel der Erfindung anhand einer Zeichnung beschrieben. In der Zeichnung zeigt:
- Fig. 1:: eine perspektivische Darstellung einer erfindungsgemäßen Mähmaschine in der Arbeitsstellung;
- Fig. 2:: eine perspektivische Darstellung der Mähmaschine nach Fig. 1 in der Transportstellung;
- Fig. 3:: eine perspektivische Darstellung einer weiteren Ausführungsform der Mähmaschine nach Fig. 2 in der Transportstellung;
- Fig. 4:: eine teilweise, abgebrochene Ansicht von oben auf die Mähmaschine nach Fig. 1;
- Fig. 5:: eine teilweise, abgebrochene Schnittdarstellung der Mähmaschine gemäß Schnitt V-V in Fig. 4;
- Fig. 6:: eine perspektivische Darstellung einer erfindungsgemäßen Mähmaschine in der Arbeitsstellung mit angebauter Aufbereitungseinrichtung;

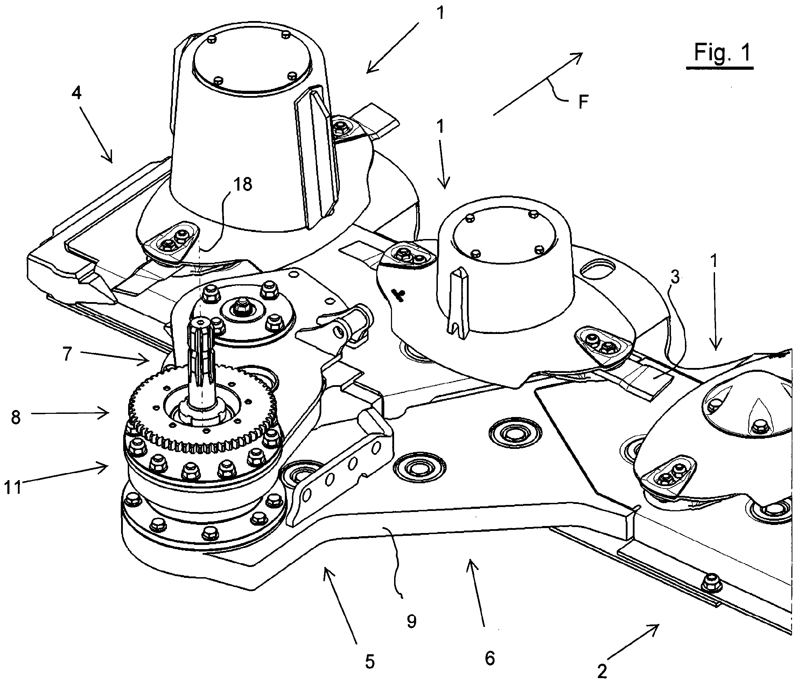

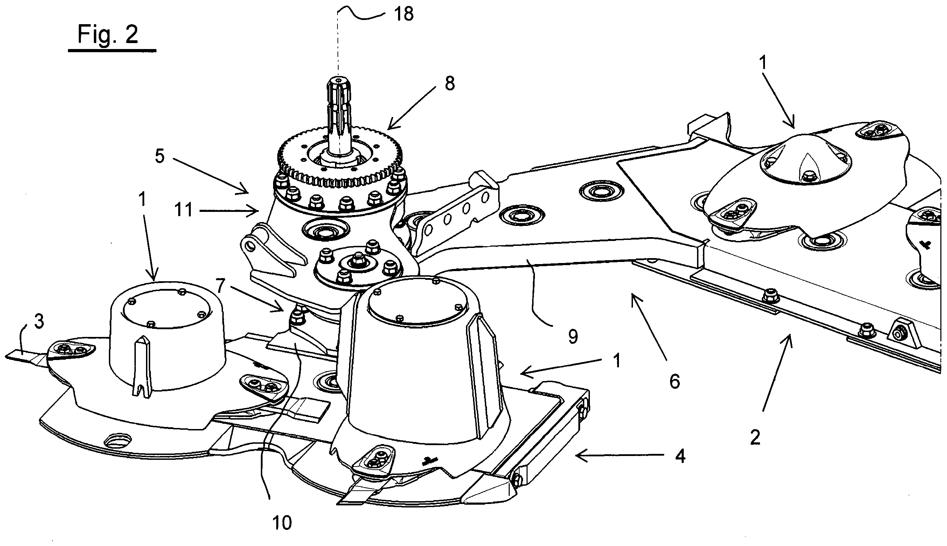

Aus der Fig. 1 geht eine erfindungsgemäße Mähmaschine mit einer Mehrzahl von Schneidorganen 1, die um eine etwa vertikale Achse rotierend auf einem Mähholm 2 angebracht sind und zum bodennahen Abmähen von Halm- und Blattgut eingesetzt werden. An ihrer Außenperipherie sind die Schneidorgane 1 mit zumindest zwei schwenkbeweglichen Schneidmessern 3 besetzt, die bei Umlauf der Schneidorgane mit hohen Drehzahlen im freien Schnitt eine Schneidwirkung erzeugen, wenn die Mähmaschine in Fahrt- und Arbeitsrichtung F gleitend über eine Feld- oder Wiesenfläche bewegt wird. Wie weiterhin aus der Fig. 1 erkennbar ist, sind die beiden äußeren Schneidorgane 1 auf zumindest einem weiteren seitlichen Mähholmabschnitt 4 angebracht, der über eine Gelenk- und Antriebsanordnung 5 an das seitliche Ende des Mähholmes 2 angebracht ist. Durch diese Anbringung kann der zumindest eine weitere seitliche Mähholmabschnitt 4 innerhalb einer horizontalen Schwenkebene aus der Arbeitsstellung nach Fig. 1 in eine Transportstellung nach Fig. 2 verschwenkt werden. In der Arbeitsstellung bildet der Mähholm 2 mit dem zumindest einen weiteren seitlichen Mähholmabschnitt eine durchgehende Mäheinrichtung, mit der ein streifenfreies Abmähen von landwirtschaftlichem Halm- und Blattgut durchgängig möglich ist. Aus der Fig. 2 dagegen ist ersichtlich, dass der zumindest eine weitere, seitliche Mähholmabschnitt 4 in der Transportstellung in Bezug zur Fahrt- und Arbeitsrichtung F hinter den beiden äußeren Schneidorganen 1 des Mähholmes 2 befindet. Durch diese erfindungsgemäße Mähmaschine ist in vorteilhafter Weise eine deutliche Reduzierung der Breitenabmessungen in der Transportstellung erreichbar. In einer weiteren vorteilhaften Ausführungsform kann der Mähholm der Mähmaschine an beiden Enden des Mähholmes mit einem weiteren seitlichen Mähholmabschnitt 4 ergänzt werden, so dass damit eine deutlich größere Breitenveränderung der Mähmaschine zwischen der Arbeitsstellung und der Transportstellung realisierbar ist.

Aus den Fig. 1 und 2 geht weiterhin hervor, dass die Gelenk- und Antriebsanordnung 5 aus zwei Halterungselementen 6,7 gebildet sind, die jeweils an einem Ende mit dem Mähholm 2 bzw. mit dem zumindest einen weiteren, seitlichen Mähholmabschnitt 4 verbunden sind, während an dem anderen Ende der Halterungselemente 6,7 eine Gelenkstelle 8 ausgebildet ist. Diese Gelenkstelle 8 ist dabei so gestaltet, dass die Halterungselemente 6,7 in mit geringem Abstand übereinanderliegenden Ebenen relativ zueinander verschwenkbar sind. Unter einen geringen Abstand versteht die Erfindung, dass bei der Schwenkbewegung der Halterungselemente 6,7 relativ zueinander eine gegenseitige Berührung der Halterungselemente 6,7 gerade vermieden wird.

Eine erste Ausführungsform einer Gelenk- und Antriebsanordnung 5 ist in den Fig. 1 und 2 wiedergegeben. Dabei erstreckt sich in der bodennahen Ebene des Mähholmes 2 ein Gehäuseabschnitt 9, der direkt an den Mähholm 2 angeschlossen ist und sich bis zur Gelenkstelle 8 erstreckt. Damit eine Schwenkbewegung der Halterungselemente 6,7 erfolgen kann, muss das Halterungselement 7 einen Höhenversatz enthalten, der dadurch entsteht, dass ein an dem zumindest einem weiteren, seitlichen Mähholmabschnitt 4 angeschlossener Gehäuseabschnitt 10 mit einem Stirnradgetriebe 11 verbunden ist, welches sich ebenfalls bis zur Gelenkstelle 8 erstreckt. Die Gehäuseabschnitte 10,11 bilden dabei jeweils mit dem Mähholm 2 bzw. mit dem zumindest einem weiteren, seitlichen Mähholmabschnitt 4 ein Öl dicht abgedichtetes Getriebegehäuse.

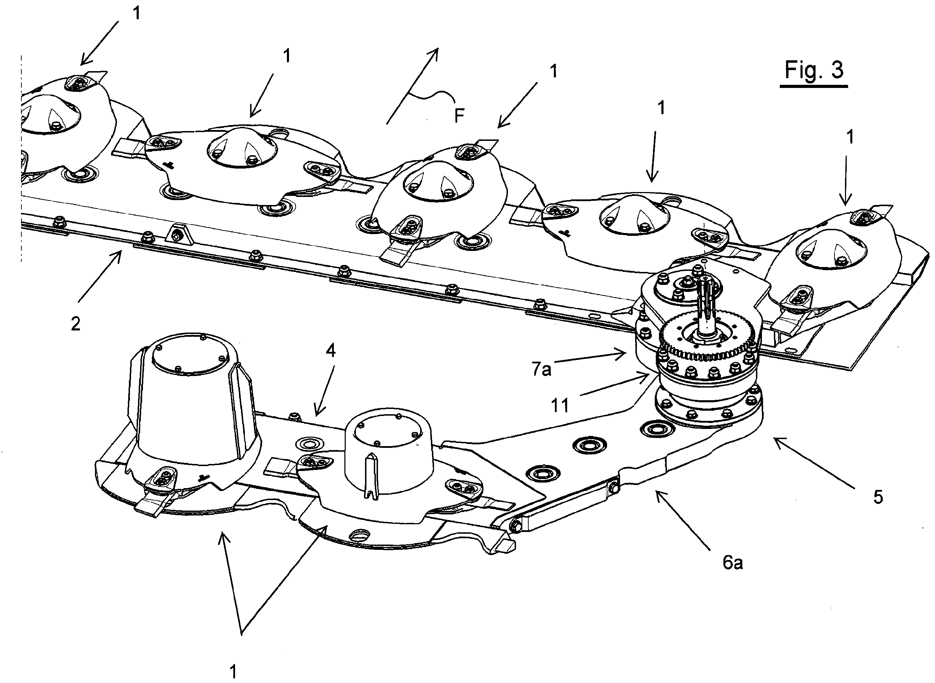

Aus der Fig. 3 geht eine weitere, denkbare Ausführungsform der Gelenk- und Antriebsanordnung 5 mit ihren Halterungselementen 6a,7a hervor. Dort ist an dem zumindest einen weiteren, seitlichen Mähholmabschnitt 4 ein Gehäuseabschnitt 9a in einer bodennahen Ebene angeschlossen, der sich bis zur Gelenkstelle 8 erstreckt. Ebenfalls analog zu der Ausführungsform nach Fig. 1 und 2 enthält das Halterungselement 7a auch hier einen Höhenversatz, der dadurch zustande kommt, dass ein sich an dem Mähholm 2 anschließender Gehäuseabschnitt 10a in einer Ebene oberhalb des Mähholmes 2 mit einem Stirnradgetriebe 11 verbunden ist.

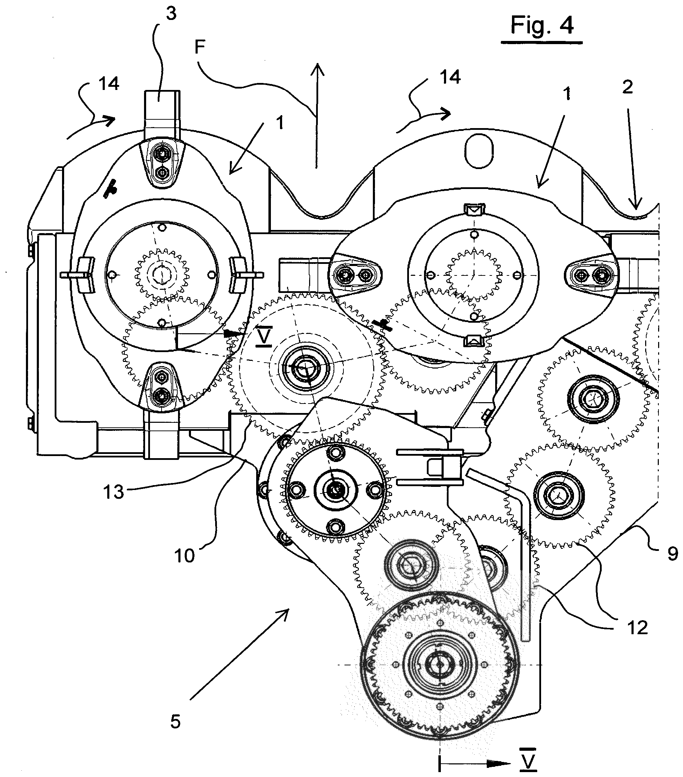

In Fig. 4 wird die Art und Weise der Antriebsverbindung zwischen dem Mähholm 2 und dem zumindest einen weiteren, seitlichen Mähholmabschnitt 4 in einer Ansicht von oben auf die Gelenk- und Antriebsanordnung 5 näher veranschaulicht. Es ist hieraus deutlich zu erkennen, dass die Antriebsverbindung zwischen dem Mähholm 2 und dem zumindest einen weiteren, seitlichen Mähholmabschnitt 4 aus aneinandergereihten Stirnrädern 12, 13 gebildet ist, welche im Innern der Gehäuseabschnitte 9, 10 untergebracht sind. Die Anzahl der in dieser Antriebsverbindung untergebrachten Stirnräder 12,13 ist dabei davon abhängig, wie weit der zumindest eine weitere, seitliche Mähholmabschnitt 4 in der Transportstellung (Fig. 2 und 3) hinter dem Mähholm 2 gelegen sein soll. Ein weiteres Kriterium bei der Auswahl der Anzahl der Stirnräder in der Antriebsverbindung der Gelenk- und Antriebsanordnung 5 ist die Festlegung der Drehrichtung 14 der oder des äußeren Schneidorganes 1. Wenn die Drehrichtung des oder der äußeren Schneidorgane 1 zur Mitte der Mähmaschine gerichtet sein soll und das äußere Schneidorgan1 des Mähholmes 2 mit einer nach außen rotieren soll, ist es erforderlich, dass die Antriebsverbindung eine geradzahlige Anzahl an Stirnräder 12,13 aufweist. Soll jedoch die Drehrichtung des äußeren Schneidorganes 1 des Mähholmes 2 auch nach innen gerichtet sein, so ist eine ungerade Anzahl an Stirnrädern 12,13 zu wählen.

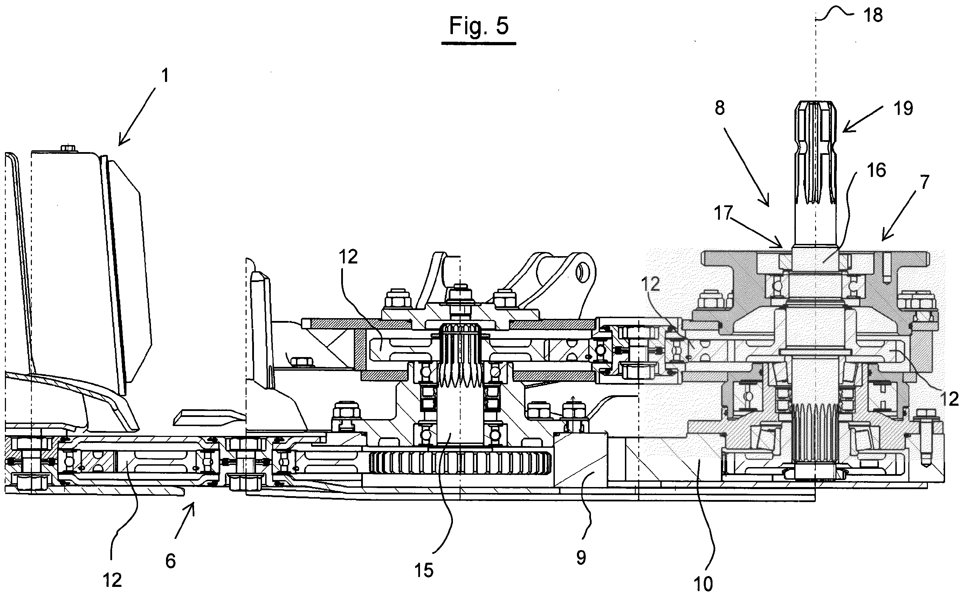

Aus der Fig. 5 geht in einer detaillierten Schnittdarstellung der Aufbau der Gelenkstelle 8 der Gelenk- und Antriebsanordnung 5 hervor. Ausgehend von dem Gehäuseabschnitt 9 des Halterungselementes 6 ist hier ein Stirnrad 12 näher veranschaulicht, wie es in dem Gehäuseabschnitt 9 drehbar gelagert ist. Auf diese Art und Weise wird in dem Gehäuseabschnitt 9 eine kinematische Kette gebildet, die sich zwischen dem äußeren Schneidorgan 1 des Mähholmes 2 und der Gelenkstelle 8 der Gelenk- und Antriebsanordnung 5 erstreckt. Im weiteren Verlauf der Antriebsverbindung zwischen dem äußeren Schneidorgan 1 des Mähholmes 2 und der Gelenkstelle 8 ist eine Stirnradwelle 15 angeordnet, die dazu dient, die Antriebsbewegung in eine Ebene oberhalb der Ebene des Mähholmes 2 einzuleiten. Das Stirnradgetriebe 11 enthält ebenfalls mehrere Stirnräder 12, die bis zu einer Antriebswelle 16 der Gelenkstelle 8 führen. Diese Antriebswelle 16 erbringt hier zwei vorteilhafte Eigenschaften der Gelenk- und Antriebsanordnung 5. Als Erstes sorgt die Antriebswelle 16 dafür, dass die Antriebsbewegung der Stirnräder 12 aus dem Stirnradgetriebe 11 aus der oberen Ebene wieder in die Ebene des zumindest einen weiteren, seitlichen Mähholmabschnittes übertragen wird. Zum Zweiten bildet die Antriebswelle 16 auch die Gelenkachse 17 der Gelenkstelle 8, so dass eine Schwenkbewegung der Halterungselemente 6,7 der Gelenk- und Antriebsanordnung 5 um die in etwa vertikal ausgerichtete Schwenkachse 18 ermöglicht ist. Zur Gewährleistung einer zuverlässigen Schmierung sind sowohl das Stirnradgetriebe 11 als auch die an den Mähholm 2 und an den zumindest einen weiteren, seitlichen Mähholmabschnitt 4 angeschlossenen Gehäuseabschnitte 9,9a,10,10a Öl dicht gegeneinander abgedichtet.

Des Weiteren zeigt die Fig. 5 eine vorteilhafte Weiterbildung der Erfindung. Durch die Ausgestaltung der Antriebswelle 16 mit einem Zapfwellenprofil 19 kann die Antriebswelle 16 auch dazu benutzt werden, dass über das Zapfwellenprofil 19 die gesamte Antriebsleistung für die Schneidorgane 1 des Mähholmes 2 und des zumindest einen weiteren, seitlichen Mähholmabschnittes an der Gelenkstelle 8 einzubringen. Daraus ergibt sich in vorteilhafter Weise, dass Antriebsteile auf keinen Fall mit abgemähtem Halm- und Blattgut in Kontakt geraten kann.

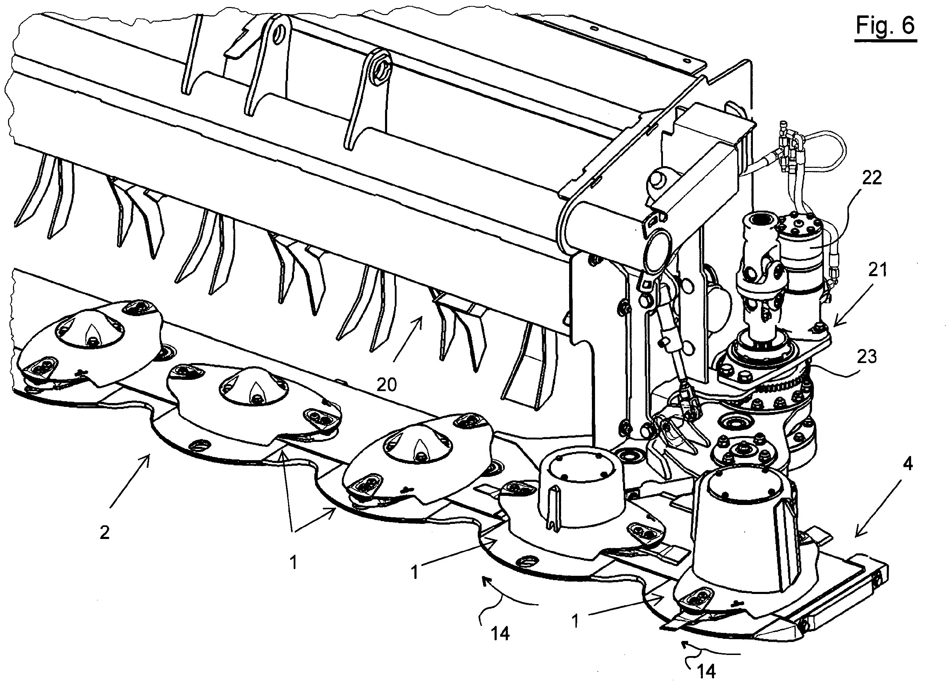

Eine mit einer angebauten Aufbereitungseinrichtung 20 versehene Mähmaschine ist in Fig. 6 näher dargestellt. Aus dieser Darstellung wird deutlich, dass der zumindest eine weitere, seitliche Mähholmabschnitt 4 so gestaltet ist, dass die beiden Schneidorgane 1 des zumindest einen weiteren, seitlichen Mähholmabschnittes 4 durch die nach innen gerichtete Drehrichtung 14 das abgemähte Halm- und Blattgut der zusätzlichen Arbeitsbreite bis in die Aufbereitungseinrichtung 20 fördert. Bezieht man die Fig. 2 und 3 in die Betrachtung der Fig. 5 mit ein, so wird außerdem klar, dass durch die Überführung des zumindest einen weiteren, seitlichen Mähholmabschnittes 4 in die Transportstellung eine vorteilhafte Anpassung der Breitenabmessungen der Mähmaschine eingetreten ist. Zur Überführung des zumindest einen weiteren, seitlichen Mähholmabschnittes 4 in die Transportstellung kann in einer weiteren vorteilhaften Ausgestaltung durch eine Betätigungseinrichtung 21 eingeleitet werden, die aus einem hydraulischen Antriebsmotor 22 besteht und in einen Zahnkranz 23 eingreift.

## Patentansprüche

1. Mähmaschine mit einer Anzahl von an einem Mähholm (2) angebrachten, um eine etwa vertikale Achse rotierend angetriebenen Schneidorganen (1), welche an der Oberseite des in seiner Längserstreckung quer zur Fahrt- und Arbeitsrichtung (F) der Mähmaschine ausgerichteten Mähholmes (2) drehbar gelagert sind und von einer Antriebsanordnung rotierend antreibbar sind, die innerhalb des Mähholmes (2) untergebracht ist, **dadurch gekennzeichnet, dass** der Mähholm (2) an zumindest einem seiner beiden, quer zur Fahrt- und Arbeitsrichtung (F) voneinander beabstandeten Enden eine Gelenk- und Antriebsanordnung (5) zur Halterung eines weiteren, seitlichen Mähholmabschnittes (4) und zum Antrieb des zumindest einen, an dem weiteren seitlichen Mähholmabschnitt (4) angebrachten Schneidorganes (1) aufweist und dass die Gelenk- und Antriebsanordnung (5) aus zwei Halterungselementen (6,7,6a,7a) gebildet ist, welche derartig zueinander angebracht sind, dass eine Schwenkbewegung des weiteren seitlichen Mähholmabschnittes (4) innerhalb der Ebene des Mähholmes (2) der Mähmaschine durchführbar ist, wobei die Halterungselemente (6,7,6a,7a) der Gelenk- und Antriebsanordnung (5) in mit geringem Abstand übereinanderliegenden Ebenen angeordnet sind.

2. Mähmaschine nach Anspruch 1, **dadurch gekennzeichnet, dass** der zumindest eine weitere seitliche Mähholmabschnitt (4) in der Arbeitsstellung in einer Flucht mit dem Mähholm (2) ausgerichtet ist.

3. Mähmaschine nach Anspruch 1, **dadurch gekennzeichnet, dass** der zumindest eine weitere seitliche Mähholmabschnitt (4) in der Transportstellung in einer Position zumindest in etwa hinter den äußeren Schneidorganen (1) des Mähholmes (2) angeordnet ist.

4. Mähmaschine nach zumindest einem der Ansprüche 1 bis 3, **dadurch gekennzeichnet, dass** die dem Mähholm (2) und dem zumindest einen weiteren seitlichen Mähholmabschnitt (4) zugeordneten Halterungselemente (6,7,6a,7a) über eine Gelenkstelle (8) mit einer zumindest in etwa vertikal ausgerichteten Schwenkachse (18) schwenkbar miteinander verbunden sind.

5. Mähmaschine nach zumindest einem der Ansprüche 1 bis 4, **dadurch gekennzeichnet, dass** das dem Mähholm (2) zugewandte Halterungselement (6) mit dem Mähholm (2) ein Öl dicht abgedichtetes Getriebegehäuse ausbildet.

6. Mähmaschine nach zumindest einem der Ansprüche 1 bis 4, **dadurch gekennzeichnet, dass** das dem weiteren seitlichen Mähholmabschnitt (4) zugeordnete Halterungselement (7) ein Stirnradgetriebe (11) umfasst, welches in einer Ebene oberhalb des weiteren seitlichen Mähholmabschnittes (4) angeordnet ist und ortsfest mit dem weiteren seitlichen Mähholmabschnitt (4) verbunden ist.

7. Mähmaschine nach Anspruch 6, **dadurch gekennzeichnet, dass** das Stirnradgetriebe (11) derart ausgebildet ist, dass über eine in etwa vertikal ausgerichtete Stirnradwelle (15) die Antriebsleistung auf den weiteren seitlichen Mähholmabschnitt (4) übertragbar ist, wobei das Stirnradgetriebe (11) Öl dicht gegenüber dem weiteren seitlichen Mähholmabschnitt (4) abgedichtet ist.

8. Mähmaschine nach zumindest einem der Ansprüche 1 bis 4, **dadurch gekennzeichnet, dass** das dem weiteren seitlichen Mähholmabschnitt (4) zugeordnete Halterungselement (6a) mit dem weiteren seitlichen Mähholmabschnitt (4) ein Öl dicht abgedichtetes Getriebegehäuse ausbildet.

9. Mähmaschine nach zumindest einem der Ansprüche 1 bis 4, **dadurch gekennzeichnet, dass** das dem Mähholm (2) zugewandte Halterungselement (7a) ein Stirnradgetriebe (11) umfasst, welches in einer Ebene oberhalb des Mähholmes (2) angeordnet ist und ortsfest mit dem Mähholm (2) verbunden ist.

10. Mähmaschine nach Anspruch 9, **dadurch gekennzeichnet, dass** das Stirnradgetriebe (11) derart ausgebildet ist, dass über eine in etwa vertikal ausgerichtete Stirnradwelle (15) die Antriebsleistung auf den Mähholm (2) übertragbar ist, wobei das Stirnradgetriebe (11) Öl dicht gegenüber dem Mähholm (2) abgedichtet ist

11. Mähmaschine nach zumindest einem der Ansprüche 1 bis 10, **dadurch gekennzeichnet, dass** der Antrieb des zumindest einen Schneidorganes (1) des zumindest einen weiteren, seitlichen Mähholmabschnittes (4) über innenliegende Stirnräder (12) in den als Getriebegehäuse ausgebildeten Halterungselementen (6,7,6a,7a) von der Antriebsanordnung der Schneidorgane (1) des Mähholmes (2) aus erfolgt.

12. Mähmaschine nach zumindest einem der Ansprüche 1 bis 11, **dadurch gekennzeichnet, dass** zur Koppelung der Halterungselemente (6,7,6a,7a) der Gelenk-und Antriebsanordnung (5) eine Antriebswelle (16) vorgesehen ist, die als Gelenkachse (17) der Gelenkstelle (8) der Gelenk- und Antriebsanordnung (5) ausgelegt ist.

13. Mähmaschine nach Anspruch 12, **dadurch gekennzeichnet, dass** die Antriebswelle (16), die als Gelenkachse (17) der Gelenkstelle (8) der Gelenk- und Antriebsanordnung (5) ausgelegt ist, zur Einleitung der Antriebsleistung für die Schneidorgane (1) des Mähholmes (2) und des zumindest einen weiteren Mähholmabschnittes (4) vorgesehen ist.

14. Mähmaschine nach zumindest einem der Ansprüche 1 bis 8, **dadurch gekennzeichnet, dass** die als Getriebegehäuse ausgebildeten Halterungselemente (6,7,6a,7a) der Gelenk- und Antriebsanordnung (5) im Bereich der Gelenkstelle (8) Öl dicht gegeneinander abgedichtet sind.

15. Mähmaschine nach zumindest einem der Ansprüche 1 bis 3, **dadurch gekennzeichnet, dass** eine Betätigungseinrichtung (21) dazu eingerichtet ist, den zumindest einen weiteren, seitlichen Mähholmabschnitt (4) aus der Arbeitsstellung (Fig. 1) in eine Transportstellung (Fig. 2 und 3) und umgekehrt zu überführen.

## Claims

1. Mower having a number of cutting elements (1) attached to a cutterbar (2) and driven in rotation about an approximately vertical axis, which cutting elements are rotatably mounted on the upper face of the cutterbar (2), which is aligned in its longitudinal extension transversely to the travel and working direction (F) of the mower, and can be driven in rotation by a drive arrangement which is housed within the cutterbar (2), **characterised in that** the cutterbar (2) has, at at least one of its two ends which are spaced apart from one another transversely to the travel and working direction (F), a hinge and drive arrangement (5) for holding a further, lateral cutterbar portion (4) and for driving the at least one cutting element (1) attached to the further lateral cutterbar portion (4) and **in that** the hinge and drive arrangement (5) consists of two mounting elements (6, 7, 6a, 7a), which are attached to one another in such a way that a pivoting movement of the further lateral cutterbar portion (4) can be carried out within the plane of the cutterbar (2) of the mower, the mounting elements (6, 7, 6a, 7a) of the hinge and drive arrangement (5) being arranged at a small distance one above the other.

2. Mower according to claim 1, **characterised in that** in the working position, the at least one further lateral cutterbar portion (4) is aligned with the cutterbar (2).

3. Mower according to claim 1, **characterised in that** in the transport position, the at least one further lateral cutterbar portion (4) is arranged in a position at least approximately behind the outer cutting elements (1) of the cutterbar (2).

4. Mower according to at least one of claims 1 to 3, **characterised in that** the mounting elements (6, 7, 6a, 7a) assigned to the cutterbar (2) and the at least one further lateral cutterbar portion (4) are pivotably connected to one another via a hinge point (8) having an at least approximately vertically aligned pivot axis (18).

5. Mower according to at least one of claims 1 to 4, **characterised in that** the mounting element (6) facing the cutterbar (2) and the cutterbar (2) form a gearbox housing sealed in an oil-tight manner.

6. Mower according to at least one of claims 1 to 4, **characterised in that** the mounting element (7) assigned to the further lateral cutterbar portion (4) comprises a spur gear (11) which is arranged in a plane above the further lateral cutterbar portion (4) and is connected to the further lateral cutterbar portion (4) in a stationary manner.

7. Mower according to claim 6, **characterised in that** the spur gear (11) is designed in such a way that the drive power can be transmitted to the further lateral cutterbar portion (4) via an approximately vertically aligned spur gear shaft (15), the spur gear (11) being sealed against the further lateral cutterbar portion (4) in an oil-tight manner.

8. Mower according to at least one of claims 1 to 4, **characterised in that** the mounting element (6a) assigned to the further lateral cutterbar portion (4) and the further lateral cutterbar portion (4) form a gearbox housing sealed in an oil-tight manner.

9. Mower according to at least one of claims 1 to 4, **characterised in that** the mounting element (7a) facing the cutterbar (2) comprises a spur gear (11) which is arranged in a plane above the cutterbar (2) and is connected to the cutterbar (2) in a stationary manner.

10. Mower according to claim 9, **characterised in that** the spur gear (11) is designed in such a way that the drive power can be transmitted to the cutterbar (2) via an approximately vertically aligned spur gear shaft (15), the spur gear (11) being sealed against the cutterbar (2) in an oil-tight manner.

11. Mower according to at least one of claims 1 to 10, **characterised in that** the at least one cutting element (1) of the at least one further, lateral cutterbar portion (4) is driven from the drive arrangement of the cutting elements (1) of the cutterbar (2) via internal spur gears (12) in the mounting elements (6, 7, 6a, 7a) formed as a gearbox.

12. Mower according to at least one of claims 1 to 11, **characterised in that** a drive shaft (16) is provided for coupling the mounting elements (6, 7, 6a, 7a) of the hinge and drive arrangement (5), which drive shaft is designed as a hinge pin (17) of the hinge point (8) of the hinge and drive arrangement (5).

13. Mower according to claim 12, **characterised in that** the drive shaft (16), which is designed as a hinge pin (17) of the hinge point (8) of the hinge and drive arrangement (5), is provided for introducing the drive power for the cutting elements (1) of the cutterbar (2) and the at least one further cutterbar portion (4).

14. Mower according to at least one of claims 1 to 8, **characterised in that** the mounting elements (6, 7, 6a, 7a), formed as a gearbox, of the hinge and drive arrangement (5) are sealed against one another in the region of the hinge point (8) so as to be oil-tight.

15. Mower according to at least one of claims 1 to 3, **characterised in that** an actuating device (21) is configured to move the at least one further, lateral cutterbar portion (4) from the working position (Fig. 1) into a transport position (Fig. 2 and 3) and vice versa.

## Revendications

1. Faucheuse comportant un certain nombre d'organes de coupe (1) entraînés en rotation autour d'un axe sensiblement vertical, installés sur une barre de coupe (2) et montés à rotation sur le côté supérieur de la barre de coupe (2) de la faucheuse déployée dans son extension longitudinale, transversale à la direction de déplacement et de travail (F) de la faucheuse, et étant entraînés en rotation par le dispositif d'entraînement logé dans la barre de coupe (2),
**caractérisée en ce que**
- à au moins l'une de ses deux extrémités écartées transversalement à la direction de déplacement et de travail (F), la barre de coupe (2) comporte un dispositif d'articulation et d'entraînement (5) pour fixer un autre segment latéral de barre de coupe (4), et pour entraîner au moins un organe de coupe (1) de cet autre segment de barre de coupe (4), et
- le dispositif d'articulation et d'entraînement (5) est formé de deux éléments de fixation (6, 7, 6a, 7a) installés l'un par rapport à l'autre de façon que l'autre segment latéral de barre de coupe (4) puisse pivoter dans le plan de la barre de coupe (2) de la faucheuse, les éléments de fixation (6, 7, 6a, 7a) du dispositif d'articulation et d'entraînement (5) étant dans des plans superposés avec un faible écartement.

2. Faucheuse selon la revendication 1,
**caractérisée en ce que**
au moins un autre segment latéral de barre de coupe (4) est orienté dans sa position de travail, dans l'alignement de la barre de coupe (2).

3. Faucheuse selon la revendication 1,
**caractérisée en ce que**
au moins un autre segment latéral de barre de coupe (4) est mis en position de transport dans une position qui protège au moins sensiblement les organes de coupe extérieurs (1) de la barre de coupe (2).

4. Faucheuse selon au moins l'une des revendications 1 à 3,
**caractérisée en ce que**
les éléments de fixation (6, 7, 6a, 7a) associés à la barre de coupe (2) et à au moins un autre segment latéral de barre de coupe (4) sont reliés de manière pivotante par une articulation (8) dont l'axe de pivotement (18) est orienté au moins sensiblement dans la direction verticale.

5. Faucheuse selon au moins l'une des revendications 1 à 4,
**caractérisée en ce que**
l'élément de fixation (6) tourné vers la barre de coupe (2) est réalisé avec la barre de coupe (2) comme boîtier de transmission, fermé de manière étanche à l'huile.

6. Faucheuse selon au moins l'une des revendications 1 à 4,
**caractérisée en ce que**
l'élément de fixation (7) associé à l'autre segment latéral de barre de coupe (4), comprend une transmission à pignons droits (11) dans un plan au-dessus de l'autre segment latéral de barre de coupe (4), en étant relié de manière fixe à l'autre segment latéral de barre de coupe (4).

7. Faucheuse selon la revendication 6,
**caractérisée en ce que**
la transmission à pignons droits (11) est réalisée de façon à transmettre la puissance motrice à l'autre segment latéral de barre de coupe (4) par un arbre de pignons droits (15) orienté sensiblement verticalement, la transmission à pignons droits (11) étant enfermée de manière étanche par rapport à l'autre segment latéral de barre de coupe (4).

8. Faucheuse selon au moins l'une des revendications 1 à 4,
**caractérisée en ce que**
l'élément de fixation (6a) associé à l'autre segment latéral de barre de coupe (4) est réalisé avec un autre segment latéral de barre de coupe (4) sous la forme d'un boîtier de transmission étanche à l'huile.

9. Faucheuse selon au moins l'une des revendications 1 à 4,
**caractérisée en ce que**
l'élément de fixation (7a) tourné vers la barre de coupe (2) comprend une transmission à pignons droits (11) qui est reliée de manière fixe à la barre de coupe (2) dans un autre plan au-dessus de la barre de coupe (2).

10. Faucheuse selon la revendication 9,
**caractérisée en ce que**
la transmission à pignons droits (11) est réalisée de façon à transmettre la puissance motrice à la barre de coupe (2) par un arbre à pignons droits (15) orienté sensiblement verticalement, la transmission à pignons droits (11) étant enfermée de manière étanche par rapport à la barre de coupe (2).

11. Faucheuse selon au moins l'une des revendications 1 à 10,
**caractérisée en ce que**
l'entraînement d'au moins un organe de coupe (1) d'au moins cet autre segment latéral de barre de coupe (4), est formé par des pignons droits (12) intérieurs, dans les éléments de fixation (6, 7, 6a, 7a) réalisés comme boîtier de transmission du dispositif d'entraînement des organes de coupe (1) de la barre de coupe (2).

12. Faucheuse selon au moins l'une des revendications 1 à 11,
**caractérisée en ce que**
un arbre d'entraînement (16) conçu comme axe articulé (17) du point d'articulation (8) du dispositif d'articulation et d'entraînement (5) réalise le couplage des éléments de fixation (6, 7, 6a, 7a) du dispositif d'articulation et d'entraînement (5).

13. Faucheuse selon la revendication 12,
**caractérisée en ce que**
l'arbre d'entraînement (16) conçu comme axe articulé (17) du point d'articulation (8) du dispositif d'articulation et d'entraînement (5), transmet la puissance motrice des organes de coupe (1) de la barre de coupe (2) et d'au moins l'autre segment de barre de coupe (4).

14. Faucheuse selon au moins l'une des revendications 1 à 8,
**caractérisée en ce que**
les éléments de fixation (6, 7, 6a, 7a) en forme de boîtier de transmission du dispositif d'articulation et d'entraînement (5) sont étanches à l'huile dans la zone de l'articulation (8).

15. Faucheuse selon au moins l'une des revendications 1 à 3,
**caractérisée en ce que**
une installation d'actionnement (21) est conçue pour faire passer au moins l'autre segment latéral de barre de coupe (4) à partir de la position de travail (figure 1) dans la position de transport (figures 2, 3) et réciproquement.
